# EUROPÄISCHE PATENTSCHRIFT

(11) **EP 1 252 811 B1**
(45) Veröffentlichungstag und Bekanntmachung des Hinweises auf die Patenterteilung: **29.08.2007**
(21) Anmeldenummer: 02006729.4
(22) Anmeldetag: 23.03.2002
(51) Int. Cl.: A01D 43/063

(54) **Grasfangeinrichtung für einen motorbetriebenen Rasenmäher**
Grass catcher for a lawn-driven lawnmower
Collecteur d'herbe pour tondeuse à gazon motorisée

(30) Priorität: 26.04.2001 DE 20107166 U
(43) Veröffentlichungstag der Anmeldung: 30.10.2002
(73) Patentinhaber: Viking GmbH, 6330 Langkampfen (AT)
(72) Erfinder: Duregger, Georg, 6342 Niederndorf (AT)
(74) Vertreter: Wasmuth, Rolf

(56) Entgegenhaltungen:
- EP-A- 0 610 062
- DE-A- 19 901 960
- GB-A- 2 280 585
- US-A- 3 421 302
- US-A- 4 745 735
- US-A- 4 836 610
- US-A- 5 564 265
- PATENT ABSTRACTS OF JAPAN vol. 1995, no. 07, 31. August 1995 (1995-08-31) & JP 07 099820 A (KUBOTA CORP), 18. April 1995 (1995-04-18)

## Beschreibung

Die Erfindung betrifft eine Grasfangeinrichtung für einen motorbetriebenen Rasenmäher nach dem Oberbegriff des Anspruchs 1.

Aus der US 5,564,265 ist ein motorbetriebener Rasenmäher zum Mähen von Grünflächen bekannt, an dessen Gehäuse eine Grasfangeinrichtung zum Sammeln von Mähgut mit Hilfe einer Haltevorrichtung angebracht ist. Die Grasfangeinrichtung besteht im wesentlichen aus zwei ineinander schiebbaren Grasfangsäcken, wobei die Grasfangsäcke aus luftdurchlässigem Material gebildet sind.

Im Betrieb von Rasenmähern mit Grasfangeinrichtungen hat es sich gezeigt, daß Staubpartikel je nach Feuchtigkeitsgehalt der zu mähenden Grünfläche mit dem Mähgut in die Grasfangeinrichtung getragen werden. Mit dem durch das Mähwerk erzeugten Trägerluftstrom werden die Staubpartikel vom Inneren des Grasfangsacks allseitig nach außen gefördert. Eine Bedienperson des Rasenmähers wird dadurch beeinträchtigt.

Die GB 2 280 585 A offenbart eine Grasfangeinrichtung aus einem undurchlässigen äußeren Gehäuse, in dem ein luftdurchlässiges Futter angeordnet ist. Im Bereich des Bodens sind Öffnungen für die Abluft vorgesehen. Das luftdurchlässige Futter ist an dem luftundurchlässigen Gehäuse festgenäht.

Die EP 0 610 062 A1 offenbart eine Grasfangeinrichtung aus einem äußeren Gehäuse und einem Auffangbehälter, der einen luftdurchlässigen Bereich besitzt. Außerdem sind Mittel zum Ableiten der Abluft vorgesehen.

Der Erfindung liegt die Aufgabe zugrunde, eine Grasfangeinrichtung für einen motorbetriebenen Rasenmäher zu schaffen, bei der die Staubbelastung der Bedienperson im Betrieb des Rasenmähers gering ist.

Die Aufgabe wird mit einer Grasfangeinrichtung mit den Merkmalen des Anspruchs 1 gelöst.

Um den Staubaustrag aus dem Grasfangsack zu minimieren und die Staubbelastung der Bedienperson des Rasenmähers so gering wie möglich zu halten, ist vorgesehen, den Grasfangsack mit einer Haube allseitig zu umgeben, wobei die Haube zur Grünfläche hin geöffnet ist, ansonsten aber ein geschlossenes Flächengebilde darstellt. Zwischen der Haube und dem Grasfangsack ist ein Abstand, also ein Luftraum vorgesehen. Zumindest sind die Seitenflächen des Grasfangsacks mit Abstand zu der Haube angeordnet. Auf diese Weise ist es möglich, daß Staubpartikel, die aus dem Grasfangsack ausgetragen werden, in dem Luftraum zwischen dem Grasfangsack und der Haube zur Grünfläche gelenkt und dort abgeschieden werden. Die Bedienperson kommt dadurch mit luftgetragenen Staubpartikeln wenig in Kontakt.

Bevorzugt ist die Haube um eine Schwenkachse beweglich an der Haltevorrichtung für den Grasfangsack festgelegt, wobei die Schwenkachse etwa quer zur Längsachse des Rasenmähers und etwa parallel zur Grünfläche ausgerichtet ist. Auf diese Weise wird das Eigengewicht der Haube im Betrieb des Rasenmähers von dem Trägerluftstrom des Mähwerks getragen. Das Mähgut wird dabei in den Grasfangsack gefördert, wobei die Trägerluft diesen durchdringt und die pendelnd um die Schwenkachse aufgehängte Haube trägt.

Es kann zweckmäßig sein, die Haltevorrichtung als einen festen Rahmen und die Raumform des Grasfangsackes bestimmend auszubilden. Die Haube läßt sich dabei starr an der Haltevorrichtung festlegen. Bevorzugt ist die Haube, in der Art eines Schnellverschlusses, mit Laschen versehen, die klipsartig mit dem Rahmen in Eingriff bringbar sind.

Die Unterkanten der Haube sind etwa gerade ausgebildet und im Betrieb des Rasenmähers parallel zur Grünfläche ausgerichtet. Zwischen den Unterkanten der Haube und der Grünfläche verbleibt ein Spalt, damit die Trägerluft aus dem Grasfangsack entweichen kann. Die Staubpartikel in der Trägerluft werden auf diese Weise an der Grünfläche abgeschieden.

Es kann zweckmäßig sein, den Grasfangsack mit einem geschlossenen, flächigen Dach auszubilden, so daß dann die Haube weniger in Wannenform als vielmehr als U-förmiges flächiges Bauteil gebildet ist und den Grasfangsack seitlich umschließt.

Ein Ausführungsbeispiel der Erfindung ist nachstehend anhand der Zeichnung erläutert. In der Zeichnung zeigt:
- Fig. 1: eine schematische Ansicht einer Grasfangeinrichtung an einem motorbetriebenen Rasenmäher,
- Fig. 2: eine schematische Ansicht eines Grasfangsacks der Grasfangeinrichtung in Fig. 1,
- Fig. 3: eine schematische Ansicht einer als U-förmig, flächiges Rahmenteil ausgebildeten Haube, welche nicht vom Hauptanspruch abgedecht ist.

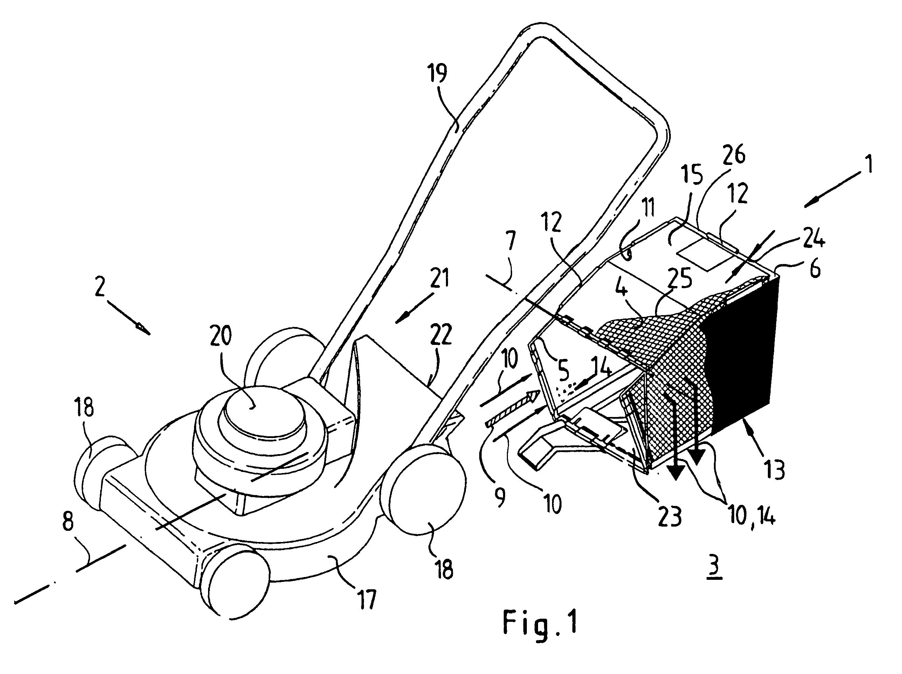

Der in Fig. 1 gezeigte motorbetriebene Rasenmäher 2 ist im wesentlichen aus einem Gehäuse 17 mit Laufrädern 18 und einem am Gehäuse angebrachten Führungsholm 19 gebildet. Ein Motor 20 treibt ein nicht gezeigtes Mähmesser im Gehäuse 17 an. Das Mähmesser bewirkt daß das Mähgut 9 zusammen mit einem Trägerluftstrom 10, welcher durch das Mähmesser erzeugt wird, aus dem spiralförmig sich zum Heck 21 des Rasenmähers 2 erweiternden Gehäuse 17 ausgetragen wird und in eine Grasfangeinrichtung 1 gelangt. Die Grasfangeinrichtung 1 ist an der Mündung 22 des Gehäuses 17 lösbar festgelegt. Die Grasfangeinrichtung 1 ist in dem gezeigten Ausführungsbeispiel als kastenförmiges Bauteil aus Metall, Kunststoff oder einem anderen geeigneten Werkstoff gebildet und besteht im wesentlichen aus einem Grasfangsack 4 mit einer Haltevorrichtung 5. Die Haltevorrichtung 5 ist als rahmenartiges Bauteil zur lösbaren Festlegung des Grasfangsacks 4 und der Mündung 22 des Rasenmähergehäuses 17 vorgesehen. Der Grasfangsack 4 weist ein geschlossenes, flächiges Dachteil 15 und ein Bodenteil 23 auf. Die drei Seitenflächen des Grasfangsacks sind als luftdurchlässiges Gitter oder ans Gewebe gebildet, welches sich zwischen Boden und Dachteil aufspannt. Das Gewebe oder Gitter 25 dient zum Zurückhalten des Mähgutes 9 im Inneren des Grasfangsacks 4. Der Trägerluftstrom 10 kann das Gewebe oder das Gitter 25 passieren.

Eine als U-förmiges, vollflächiges Bauteil 16 ausgebildete Haube 6 umschließt die Seitenflächen des Grasfangsacks 4 mit Abstand 24 zu diesem. Die Grasfangeinrichtung 1 ist in dem gezeigten Ausführungsbeispiel in Fig. 1 zur starren Befestigung an dem Gehäuse 17 des Rasenmähers 2 vorgesehen. Es kann zweckmäßig sein, etwa um die Manövrierfähigkeit des Rasenmähers in unebenem Gelände zu verbessern, die Grasfangeinrichtung 1 um eine etwa horizontal und quer zur Längsachse 8 des Rasenmähers 2 verlaufende Schwenkachse 7 beweglich an der Haltevorrichtung 5 anzuordnen. Es kann auch zweckmäßig sein, den Grasfangsack 4 als flexibles Bauteil, welches lediglich an der Mündung 22 des Gehäuses 17 befestigt wird, auszuführen. Der Grasfangsack 4 kann sich dann in gewissen Grenzen unter einer als wannenförmiges Bauteil gebildeten Haube frei bewegen, wobei die Haube von dem Trägerluftstrom 10 über der Grünfläche 3 mit geringem Abstand luftkissenartig getragen wird.

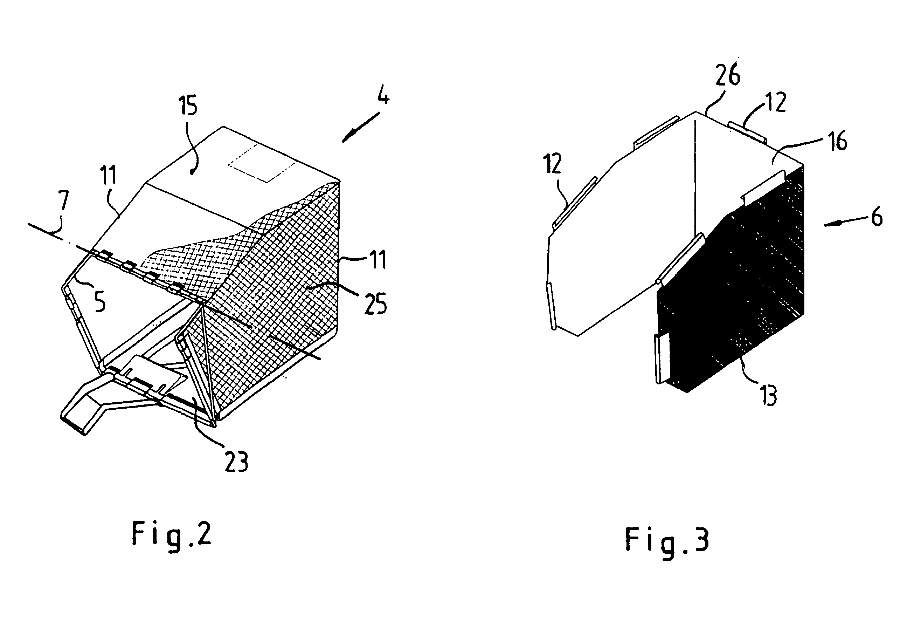

In dem gezeigten Ausführungsbeispiel ist die Haltevorrichtung 5 für den Grasfangsack 4 als fester Rahmen 11, der die Raumform des Grasfangsacks 4 bestimmt, ausgebildet. Dies hat den Vorteil, daß die Haube lösbar an der Haltevorrichtung 5, an dem Rahmen 11 also, festgelegt werden kann. Wie Fig. 3 verdeutlicht, weist die Haube 6 entlang ihres oberen Randes 26, welcher der Grünfläche 3 abgewandt ist, zu diesem Zweck im Querschnitt halbkreisförmige Laschen 12 auf. Die Laschen 12 sind geeignet, die Haube 6 klipsartig an dem Rahmen festzulegen. Im Betrieb des Rasenmähers 2 bewegen sich die Unterkanten 13 der Haube 6 etwa parallel und mit geringem Abstand zur Grünfläche 3. Treten nun das Mähgut 9 und die Trägerluft 10 mit entsprechenden Staubpartikeln 14 in den Grasfangsack 4 ein, so hält der Grasfangsack 4 das Mähgut 9 zurück und läßt die Trägerluft 10 zusammen mit den Staubpartikeln 14 nach außen passieren, wie dies in Fig. 1 gezeigt ist. Die Haube 6 umgibt mit einem gewissen Abstand 24, beispielsweise mit etwa 2 cm bis 5 cm den Grasfangsack 4, so daß zwischen dem Grasfangsack und der Haube 6 die Trägerluft 10 mit den Staubpartikeln 14 auf die Grünfläche 3 gelenkt wird. Die Staubpartikel 14 werden an der Grünfläche 3 somit abgeschieden. Die Staubbelastung der Bedienperson durch luftgetragene Staubpartikel 14 ist auf diese Weise minimiert.

## Patentansprüche

1. Grasfangeinrichtung für einen motorbetriebenen Rasenmäher (2) zum Mähen von Grünflächen (3), bestehend aus einem luftdurchlässigen Grasfangsack (4) mit einer Haltevorrichtung (5) zur lösbaren Festlegung des Grasfangsacks (4) an dem Rasenmäher (2), wobei die Haltevorrichtung (5) ein fester Rahmen (11) ist, der die Raumform des Grasfangsackes (4) bestimmt,
**dadurch gekennzeichnet, daß** der Grasfangsack (4) von einer Haube (6) im wesentlichen allseitig ganzflächig mit Abstand umschlossen ist, wobei die Haube (6) zur Grünfläche (3) geöffnet ist, und daß die Haube (6) um eine Schwenkachse (7) beweglich und lösbar an der Haltevorrichtung (5) für den Grasfangsack (4) festgelegt ist.

2. Grasfangeinrichtung nach Anspruch 1,
**dadurch gekennzeichnet, daß** die Schwenkachse (7) etwa quer zur Längsachse (8) des Rasenmähers (2) angeordnet ist.

3. Grasfangeinrichtung nach einem der Ansprüche 1 oder 2,
**dadurch gekennzeichnet, daß** die Schwenkachse (7) im Betrieb des Rasenmähers (2) etwa parallel zur Grünfläche (3) ausgerichtet ist.

4. Grasfangeinrichtung nach einem der Ansprüche 1 bis 3,
**dadurch gekennzeichnet, daß** die Haube (6) mit Laschen (12) versehen ist, die klipsartig am Rahmen (11) festliegen.

5. Grasfangeinrichtung nach einem der Ansprüche 1 bis 4,
**dadurch gekennzeichnet, daß** die Unterkanten (13) der Haube (6) im Betrieb des Rasenmähers (2) etwa parallel zur Grünfläche (3) ausgerichtet sind.

6. Grasfangeinrichtung nach einem der Ansprüche 1 bis 5,
**dadurch gekennzeichnet, daß** im Betrieb des Rasenmähers (2) Staubpartikel (14) durch den Grasfangsack (4) geführt und durch die Haube (6) zur Grünfläche (3) gelenkt sind.

7. Grasfangeinrichtung nach einem der Ansprüche 1 bis 6,
**dadurch gekennzeichnet, daß** der Grasfangsack (4) ein flächiges Dachteil (15) aufweist und die Haube (6) als U-förmiges, den Grasfangsack (4) seitlich umschließendes vollflächiges Rahmenteil (16) gebildet ist.

## Claims

1. Grass catcher for a motor-driven lawn-mower (2) for mowing grassy surfaces (3), consisting of a grass-catching bag (4) permeable to air with a holding device for fixing the grass-catching bag (4) onto the lawn-mower (2), the said holding device (5) being a rigid frame (11) which determines the spatial shape of the grass-catching bag (4),
**characterised in that** the grass-catching bag (4) is enclosed by a hood (6) essentially on all sides and all over its area with some clearance, the said hood (6) being open towards the grassy surface (3), and the hood (6) is fixed detachably on the holding device (5) for the grass-catching bag (4) in such manner that it can be moved about a pivot axle (7).

2. Grass catcher according to Claim 1,
**characterised in that** the pivot axle (7) is positioned approximately transversely relative to the longitudinal axis (8) of the lawn-mower (2).

3. Grass catcher either of Claims 1 or 2,
**characterised in that** when the lawn-mower (2) is being operated the pivot axle (7) is orientated approximately parallel to the grassy surface (3).

4. Grass catcher according to any of Claims 1 to 3,
**characterised in that** the hood (6) is provided with brackets (12) which clip onto the frame (11).

5. Grass catcher according to any of Claims 1 to 4,
**characterised in that** when the lawn-mower (2) is being operated, the lower edges (13) of the hood (6) are orientated approximately parallel to the grassy surface (3).

6. Grass catcher according to any of Claims 1 to 5,
**characterised in that** while the lawn-mower (2) is being operated, dust particles (14) pass through the grass-catching bag (4) and are deflected by the hood (6) onto the grassy surface (3).

7. Grass catcher according to any of Claims 1 to 6,
**characterised in that** the grass-catching bag (4) has a flat roof portion (15) and the hood (6) is formed as a U-shaped, all-round frame component (16) which encloses the grass-catching bag (4) at the sides.

## Revendications

1. Collecteur d'herbe pour tondeuse à gazon motorisée (2) destiné à tondre des espaces verts (3), composé d'un sac collecteur d'herbe perméable à l'air (4) comportant un dispositif d'attache (5) pour la fixation amovible du sac collecteur d'herbe (4) sur la tondeuse à gazon (2), sachant que le dispositif d'attache (5) est un cadre fixe (11) qui détermine la forme tridimensionnelle du sac collecteur d'herbe (4), **caractérisé en ce que** le sac collecteur d'herbe (4) est entouré à distance par une calotte (6), pour l'essentiel de tout côté et sur toute sa surface, sachant que la calotte (6) est ouverte en direction de l'espace vert (3), et **en ce que** la calotte (6) est fixée de manière mobile et amovible, autour d'un axe de pivotement (7), sur le dispositif d'attache (5) pour le sac collecteur d'herbe (4).

2. Collecteur d'herbe selon la revendication 1, **caractérisé en ce que** l'axe de pivotement (7) est disposé de manière à peu près transversale à l'axe longitudinal (8) de la tondeuse à gazon (2).

3. Collecteur d'herbe selon l'une quelconque des revendications 1 ou 2, **caractérisé en ce que** l'axe de pivotement (7) est orienté de manière à peu près parallèle à l'espace vert (3) lorsque la tondeuse à gazon (2) est en marche.

4. Collecteur d'herbe selon l'une quelconque des revendications 1 à 3, **caractérisé en ce que** la calotte (6) est munie de languettes (12) qui sont fixées sur le cadre (11) à mode de clips.

5. Collecteur d'herbe selon l'une quelconque des revendications 1 à 4, **caractérisé en ce que** les arêtes inférieures (13) de la calotte (6) sont orientées de manière à peu près parallèle à l'espace vert (3) lorsque la tondeuse à gazon (2) est en marche.

6. Collecteur d'herbe selon l'une quelconque des revendications 1 à 5, **caractérisé en ce que**, lorsque la tondeuse à gazon (2) est en marche, des particules de poussière (14) sont conduites à travers le sac collecteur d'herbe (4) et dirigées à travers la calotte (6) en direction de l'espace vert (3).

7. Collecteur d'herbe selon l'une quelconque des revendications 1 à 6, **caractérisé en ce que** le sac collecteur d'herbe (4) comporte une toiture plane (15) et **en ce que** la calotte (6) est réalisée sous la forme de cadre (16) en forme de U, recouvrant la surface entière et entourant latéralement le sac collecteur d'herbe (4).
